# EUROPEAN PATENT SPECIFICATION

(11) **EP 2 692 618 B1**
(45) Date of publication and mention of the grant of the patent: **28.10.2015**
(21) Application number: 13178705.3
(22) Date of filing: 31.07.2013
(51) Int. Cl.: B62J 17/02

(54) **Saddle riding type vehicle**
Sattelfahrzeug
Véhicule de type à enfourcher

(30) Priority: 31.07.2012 JP 2012170147
(43) Date of publication of application: 05.02.2014
(73) Proprietor: Yamaha Hatsudoki Kabushiki Kaisha, Iwata-shi, Shizuoka 438-8501 (JP)
(72) Inventor: Kawasaki, Yasuhiro, Shizuoka, 438-8501 (JP)
(74) Representative: Stöckeler, Ferdinand

(56) References cited:
- FR-A1- 2 616 734
- JP-A- 2008 189 177
- JP-A- 2010 013 024
- TW-B- 590 936

## Description

### BACKGROUND

### TECHNICAL FIELD

The present invention relates to saddle riding type vehicles, and more specifically to a saddle riding type vehicle capable of reducing negative pressure on the chest of a rider.

### DESCRIPTION OF THE BACKGROUND ART

A motorcycle is known as a kind of saddle riding type vehicle. The motorcycle is provided with a front cover and a windscreen in front of a rider seated on a seat. A wind generated as the vehicle travels (hereinafter as a "traveling wind") blows against the front cover and the windscreen. A traveling wind that blows against the front cover and the windscreen flows toward the back along the surfaces of the front cover and the windscreen. Therefore, the traveling wind is unlikely to come into a space between the front cover and a rider (hereinafter referred to as the "first space"), and a pressure difference is generated between the first space and a space surrounding the first space.

In order to eliminate the pressure difference between the first space and the space surrounding the first space, arrangements provided with a duct at the front cover and the windscreen to guide a traveling wind into the first space have been suggested. In a motorcycle disclosed by JP-A 2007-62643, for example, a gap is provided between the front cover and the windscreen and a duct is provided between the gap and the first space. A traveling wind partly comes into the first space through the duct. In the motorcycle disclosed by JP-A 2007-62643, a part of a traveling wind is guided into the first space through the gap between the front cover and the windscreen, so that a pressure difference generated between the first space and the space surrounding the first space is reduced.

### SUMMARY

In the motorcycle disclosed by JP-A 2007-62643, a supply inlet used to supply a traveling wind into the first space is provided below the gap between the front cover and the windscreen. The duct of the motorcycle disclosed by JP-A 2007-62643 includes a part bent downward from a part that extends in the front-back direction. As the direction introducing a traveling wind is changed largly, the traveling wind may stay around or blow against the wall surface of the duct. Therefore, it is difficult for the motorcycle disclosed by JP-A 2007-62643 to guide a sufficient amount of a traveling wind into the first space. In the motorcycle disclosed by JP-A 2007-62643, the duct is provided inside the front cover. Therefore, the front cover has a large size in the motorcycle disclosed by JP-A 2007-62643.

In the motorcycle disclosed by JP-A 2007-62643, a mechanism used to reduce a pressure difference generated between the first space and the space surrounding the first space includes the three components, i.e., the front cover, the windscreen, and the duct. In other words, the motorcycle disclosed by JP-A 2007-62643 has a large number of parts.

It is an object of the present invention to provide a saddle riding type vehicle with a reduced number of parts, preventing the front cover from having a large size. It is also an object of the present invention to guide a traveling wind toward a rider and into a windscreen so that negative pressure on a rider and negative pressure on the windscreen can be reduced effectively by the traveling wind.

This object is achieved by a saddle riding type vehicle according to claim 1.

A saddle riding type vehicle according to the present invention includes a head pipe, a front cover, an outer cover, and a screen. The front cover is positioned in front of the head pipe and provided with a headlight. The outer cover is attached at a front surface of the front cover. The screen is positioned above the outer cover. The screen overlaps the front cover in a location above a lower end of the outer cover in a front view. A duct is formed between the front cover and the outer cover to extend in an up-down direction. The duct includes a first opening that is open downward and a second opening positioned above the first opening to guide a traveling wind to the rider. The front cover includes a guide positioned below the first opening, wherein the guide has an upper end that extends to the first opening. The guide is positioned below a lower end of the outer cover and more depressed to a rear side than a part of a cover main body of the front cover positioned around the guide in a side view, wherein traveling wind blowing against the guide is guided into the first opening by the guide, passes through the duct and is let out from the second opening.

In the above-described saddle riding type vehicle, the guide provided at the front cover is more depressed to the back than a periphery of the guide in a side view. Therefore, the above-described saddle riding type vehicle more easily collects a traveling wind that blows against the front cover at the guide.

In the above-described saddle riding type vehicle, a traveling wind blows against the guide and is then guided into the first opening by the guide. In the saddle riding type vehicle, the upper end of the guide extends to the first opening. Therefore, a traveling wind collected at the guide is more easily guided to the first opening. The second opening is continuous with a space formed between a rider and the front cover, and therefore a traveling wind guided to the first opening comes into the space formed between the rider and the front cover through the duct. Therefore, a pressure difference generated between the space formed between the rider and the front cover and a space surrounding the space can be reduced efficiently.

In the above-described saddle riding type vehicle, the screen is positioned above the front cover, a traveling wind comes into the screen from the gap between the screen and the front cover, so that negative pressure on the screen can be reduced.

In the above-described saddle riding type vehicle, the front cover and the outer cover form a structure that reduces a pressure difference generated between the space formed between a rider and the front cover and a space surrounding the space. Therefore, in the saddle riding type vehicle, the number of parts can be reduced as compared to the case of forming a structure used to reduce a pressure difference generated between a space formed between a rider and a front cover and a space surrounding the space using three components, i.e., a windscreen, the front cover, and a duct.

In the above-described saddle riding type vehicle, the duct is formed between the front cover and the outer cover. In the saddle riding type vehicle, the front cover can be reduced in size as compared to a vehicle including such a duct inside a front cover.

### BRIEF DESCRIPTION OF THE DRAWINGS

Fig. 1 is an overall side view of a saddle riding type vehicle according to the present invention.
Fig. 2 is a partly enlarged front view of the saddle riding type vehicle.
Fig. 3 is a part view of an outer cover.
Fig. 4 is a part view of an inner cover.
Fig. 5 is a left side sectional view of a front cover.
Fig. 6 is a partly enlarged front view of the front cover.
Fig. 7 is a sectional view taken along line X-X in Fig. 6.
Fig. 8 is a partly enlarged front view of the outer cover and the inner cover.
Fig. 9 is a left side view of the front cover.
Fig. 10 is an over view of a periphery of a meter as viewed from a rider side.

### DESCRIPTION OF THE EMBODIMENTS

Now, a motorcycle 10 as a kind of saddle riding type vehicle according to one embodiment of the present invention will be described in conjunction with the accompanying drawings, in which the same or corresponding portions are designated by the same reference characters and their description will not be repeated. In the drawings, the arrow F indicates the forward direction of the motorcycle 10, the arrow U the upward direction, the arrow R the rightward direction and the arrow L the leftward direction.

### Overall Structure

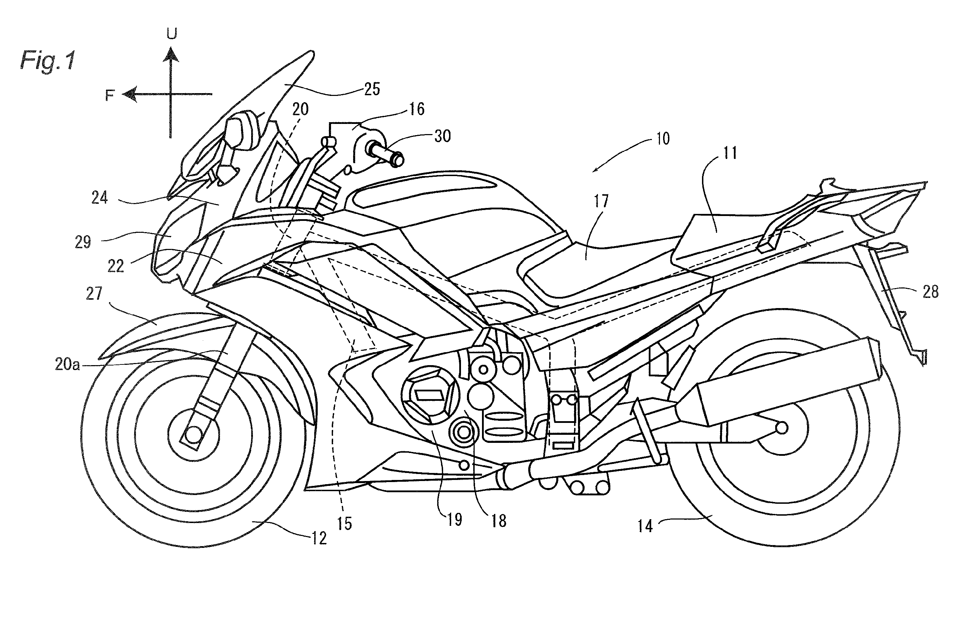

Fig. 1 is an overall side view of the motorcycle 10 according to the present invention. Note that the front, back, left, and right in the following description refer to these directions as viewed from a rider seated on the seat 17 of the motorcycle 10. A center in the vehicle widthwise direction (vehicle widthwise center) indicates the center of the width of the vehicle in the horizontal direction in a front view. The direction toward the outer side in the vehicle widthwise direction indicates a direction from the vehicle widthwise center to the right or the left. The direction toward the inner side in the vehicle widthwise direction indicates a direction from the right or left of the vehicle to the vehicle widthwise center.

The motorcycle 10 includes a vehicle main body 11, a front wheel 12 provided at a front part of the motorcycle 10 and a rear wheel 14 provided at a rear part of the motorcycle 10.

The vehicle main body 11 mainly includes a vehicle body frame 15, a handle 16, the seat 17, and a power unit 18.

The vehicle body frame 15 supports the power unit 18, the seat 17 and like. The power unit 18 includes an engine 19 and a driving system. The vehicle frame 15 is indicated by a broken line in Fig. 1. The vehicle body frame 15 has a head pipe 20. A steering shaft that is not shown is inserted rotatably in the head pipe 20. The handle 16 is attached to an upper end of the steering shaft. A pair of front forks 20a is attached to a lower end of the steering shaft through a bracket that is not shown. The front wheel 12 is attached to lower ends of the front forks 20a in a rotatable manner.

The vehicle body frame 15 is covered with a vehicle body cover 22. The vehicle body cover 22 is made of resin. The vehicle body cover 22 includes a front cover 24, a front fender 27, and a rear fender 28.

The front cover 24 is positioned in front of the seat 17. The front cover 24 covers a front part of the head pipe 20. The front cover 24 is provided with a head light 29. A windscreen 25 is positioned above the head light 29.

The front fender 27 is positioned above the front wheel 12. The front fender 27 is positioned under the front cover 24. The front fender 27 protrudes ahead of the front cover 24. The rear fender 28 is positioned above the rear wheel 14.

The handle 16 is positioned in front of the seat 17. The handle 16 extends in the left-right direction. Grips 30 that can be grasped by a rider are positioned at the ends of the handle 16.

The seat 17 is positioned above the power unit 18. The power unit 18 is positioned in front of the rear wheel 14.

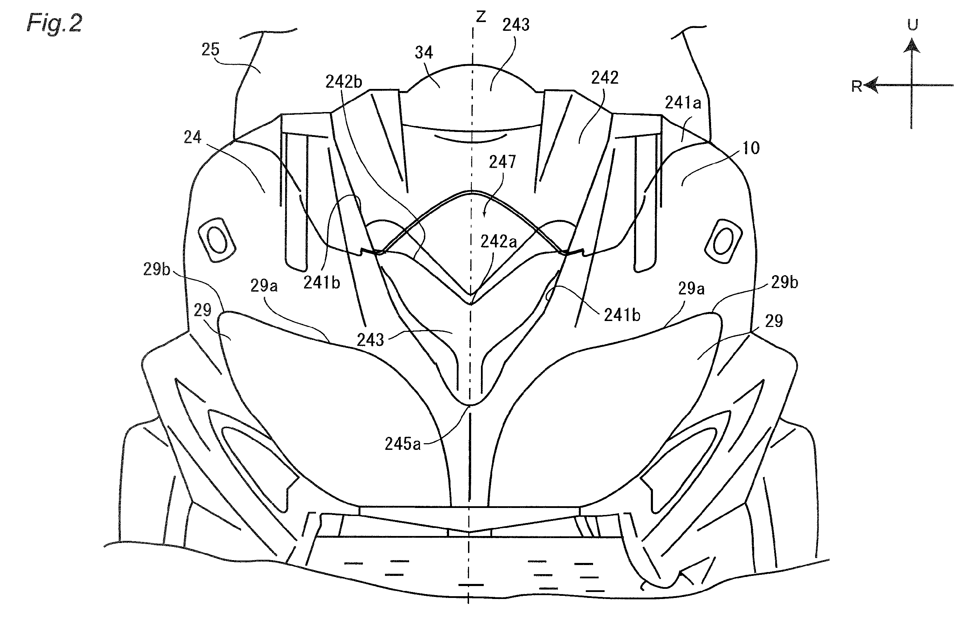

Fig. 2 is a front view of the motorcycle 10. In Fig. 2, the handle 16, the front wheel 12 and the like are not shown for ease of illustration.

The front cover 24 is provided with a pair of head lights 29. The head lights 29 illuminate ahead. The pair of headlights 29 is positioned symmetrically with respect to the vehicle widthwise center. An upper end 29a of each of the head lights 29 is inclined upward and outward from the vehicle widthwise center. The upper end 29a of the head light 29 has a first end 29b in its outermost position in the vehicle widthwise direction. The first end 29b is positioned in the uppermost position of the upper end 29a.

The front cover 24 includes a cover main body 241a and an inner cover 243. The front surface of the front cover is provided with an outer cover 242. The cover main body 241a is provided with the head light 29. The cover main body 241a has an opening 241b in the vehicle widthwise center. The opening 241b is formed at an upper part of the cover main body 241a. The opening 241b has an approximately triangular shape in a front view. The inner cover 243 is positioned at the opening 241b. The outer cover 242 is positioned at a front surface of the inner cover 243. A part of the inner cover 243 is covered with the outer cover 242. The inner cover 243 is exposed without being covered with the outer cover 242 in an upper and a lower position than the outer cover 242.

The outer cover 242 is attached to a front surface of the front cover 24. The outer cover 242 is positioned in the vehicle widthwise center. The outer cover 242 overlaps a central line Z positioned in the vehicle widthwise center. A lower end of the outer cover 242 includes a lowermost end 242a (that corresponds to a second lower end according to the invention) positioned in the vehicle widthwise center. The lowermost end 242a is positioned in the lowermost position of the lower end of the outer cover 242. The outer cover 242 includes an inclined end 242b (that corresponds to a second inclined end according to the present invention) that is inclined upward and outward from the lowermost end 242a in the widthwise direction.

The inner cover 243 overlaps the central line Z positioned in the vehicle widthwise center in a front view. Only a part of the inner cover 243 not covered with the outer cover 242 is exposed in a front view. A lower part of the inner cover 243 is not covered with the outer cover 242. A lower end of the inner cover 243 includes a central lower end 245a (that corresponds to a first lower end according to the invention) positioned in the vehicle widthwise center. The central lower end 245a is positioned below the lowermost end 242a in a front view. The central lower end 245a is positioned below the first end 29b in a front view.

The windscreen 25 is positioned in front of and above the front cover 24 and the outer cover 242. An upper part of the front cover 24 overlaps the windscreen 25 in a front view. The windscreen 25 is positioned above the lowermost end 242a in a front view. The windscreen 25 is made of transparent resin. Therefore, an upper part of the front cover 24 can be viewed through the windscreen 25 in a front view. A lower end of the windscreen 25 is curved upward in the vehicle widthwise center. There is a gap 247 between the outer cover 242 and the windscreen 25.

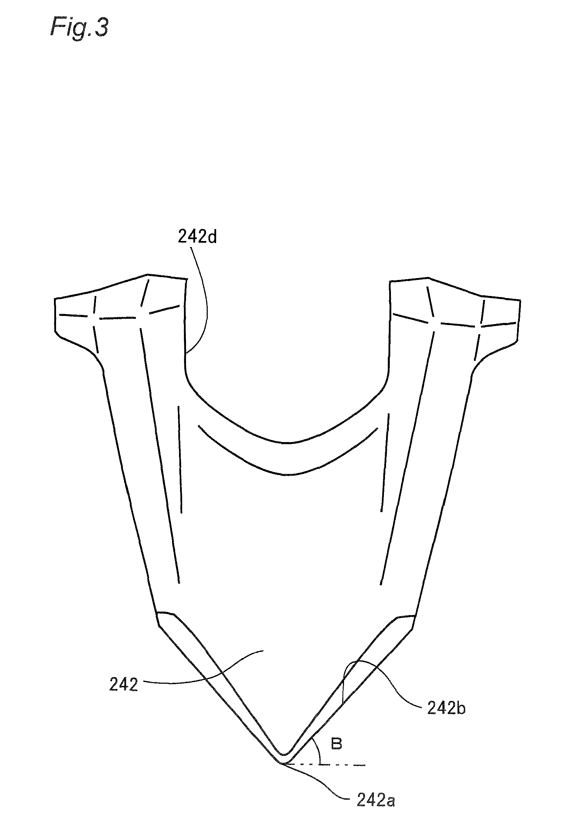

Fig. 3 is a part view of the outer cover 242. The outer cover 242 includes the inclined end 242b. The inclined end 242b is inclined upward and outward from the lowermost end 242a in the vehicle widthwise direction. The inclined end 242b is inclined at an inclination angle B with respect to the horizontal direction. An upper end of the outer cover 242 includes a curved part 242d that is greatly curved downward in the vehicle widthwise center. When the outer cover 242 is attached to the front cover 24, a part of the inner cover 243 is exposed from the curved part 242d.

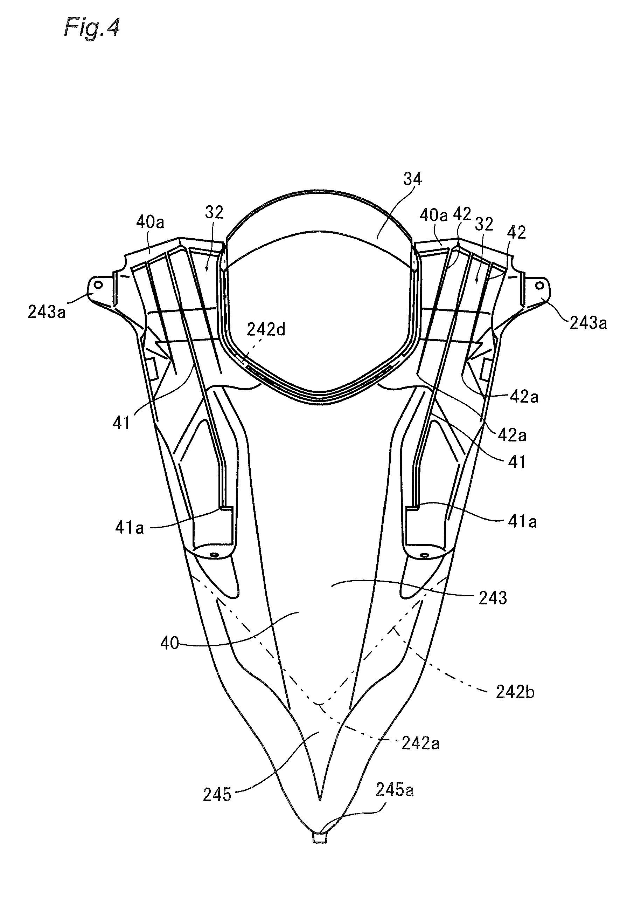

Fig. 4 is a part view of the inner cover 243. The two-dot chain line in Fig. 4 indicates the position of the outer cover 242 and the position of the curved part 242d with respect to the inner cover 243 in a front view as the outer cover 242 and the inner cover 243 are attached to the motorcycle 10.

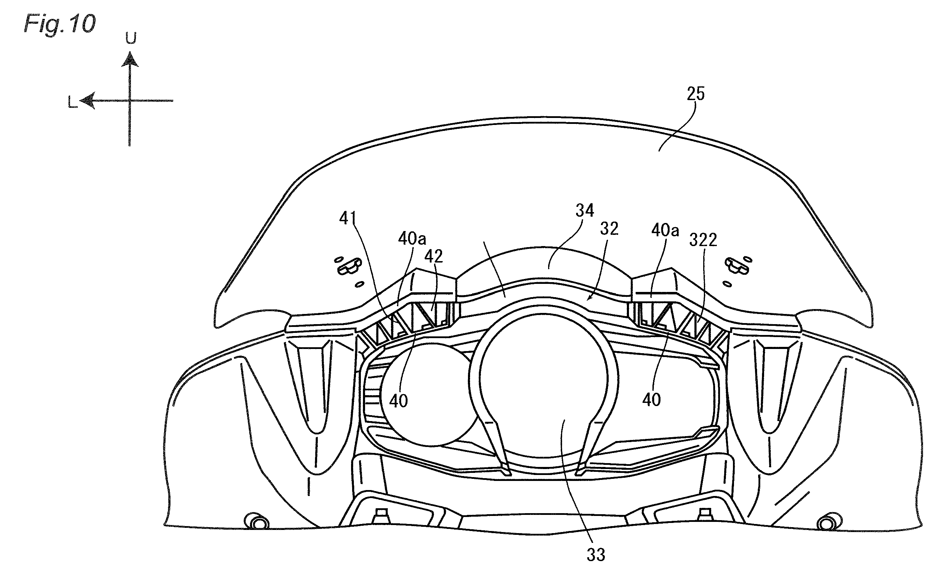

The inner cover 243 extends below a lower end of the outer cover 242 in a front view. The inner cover 243 includes a cover plate 40, a pair of partitions 41 and a plurality of ribs 42. The cover plate 40 has an approximately triangular shape in a front view. The cover plate 40 is provided with an attachment plate 243a for its attachment to the cover main body 241a. An opening edge 40a is positioned a prescribed space apart from the cover plate 40 at the front side of an upper end of the cover plate 40. The opening edge 40a extends in the vehicle-widthwise direction. Also referring to Fig. 10, an upper opening 32 (which corresponds to a second opening according to the present invention) is formed between the opening edge 40a and the cover plate 40. The upper opening 32 is formed at an upper end of the inner cover 243 in the entire widthwise direction of the vehicle. A part of the upper opening 32 covered with a shield cover 34 that will be described is not exposed in Fig. 4. When the inner cover 243 is attached to the motorcycle 10 together with the outer cover 242, a part of the inner cover 243 is covered with the outer cover 242. Therefore, the part of the inner cover 243 cannot be visually inspected from the front.

The partition 41 extends substantially perpendicularly from the surface of the cover plate 40. The partition 41 extends downward from the upper opening 32. An upper end of the partition 41 is connected to the opening edge 40a of the upper opening 32 and the cover plate 40. The partition 41 adjusts the amount and direction of traveling wind let out from the upper opening 32. The pair of partitions 41 is provided symmetrically with respect to the vehicle widthwise center. A lower end 41a of the partition 41 is positioned above the inclined end 242b of the outer cover 242. The partition 41 is inclined with respect to the vertical direction in a front view. The partition 41 is inclined upward and outward in the vehicle widthwise direction from its lower part.

The rib 42 extends substantially perpendicularly to the surface of the cover plate 40. The rib 42 is inclined downward and inward in the vehicle-widthwise direction from the upper opening 32. An upper end of the rib 42 is connected to the opening edge 40a of the upper opening 32 and the cover plate 40. The pair of ribs 42 is positioned in the vehicle widthwise direction with the partitions 41 therebetween. The ribs 42 are positioned on the right and left sides of the respective partitions 41. The lower end 42a of the rib 42 is positioned above the lower end 41a of the partition 41. The ribs 42 are arranged parallel to the partitions 41.

The part of the inner cover 243 that can be visually inspected from the outside is provided with surface treatment such as painting and polishing. At least, the part of the inner cover 243 excluding the part above the inclined end 242b of the outer cover 242 and below the lower end 42a of the rib 42 is provided with surface treatment. Here, although not shown, the rear surface of the outer cover 242 is not provided with surface treatment at the part that is not visually inspected by a rider.

When the inner cover 243 and the outer cover 242 are attached to the cover main body 241a, the inner cover 243 is first positioned at the opening 241b of the cover main body 241a. At the time, the attachment plate 243a is fixed to the cover main body 241a. Then, the outer cover 242 is positioned at a front surface of the inner cover 243 and the outer cover 242 is fixed to the inner cover 243.

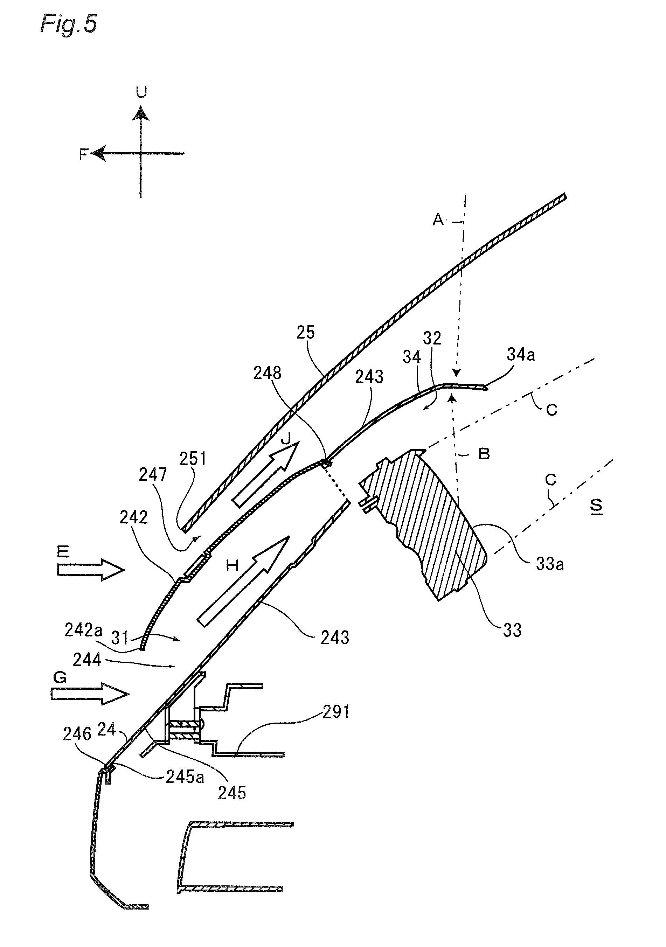

Fig. 5 is a left side sectional view of the front cover 24 in the vehicle widthwise center. The arrow E in Fig. 5 indicates a traveling wind that blows against the outer cover 242. The arrow J indicates a traveling wind passed through the gap 247 between the outer cover 242 and the windscreen 25. The arrow G indicates a traveling wind that blows against a lower part of the inner cover 243. The arrow H indicates a traveling wind that enters between the outer cover 242 and the inner cover 243. A space S in Fig. 5 indicates a space formed between a rider and the front cover 24.

A bulb 291 for the head light 29 is positioned in a level higher than a connecting part 246 between the cover main body 241a and the inner cover 243. A lower opening 244 (that corresponds to a first opening according to the present invention) is provided between a lower end of the outer cover 242 and the inner cover 243. The lower opening 244 is open in the up-down direction. The lower opening 244 is surrounded by the lower end of the outer cover 242 and the inner cover 243. A duct 31 is formed between the inner cover 243 and the outer cover 242. The duct 31 is provided between the lower opening 244 and the upper opening 32. The duct 31 guides a traveling wind entered into the lower opening 244 to a rider. A meter 33 is positioned behind a connection part 248 between the outer cover 242 and the inner cover 243.

The windscreen 25 is positioned above the lowermost end 242a of the outer cover 242. A lower end 251 of the windscreen 25 is positioned above the lowermost end 242a of the outer cover 242 in a side view. The windscreen 25 is inclined upward from the front to the back. The lower end 251 of the windscreen 25 is positioned above and apart from the outer cover 242.

The inner cover 243 includes the shield cover 34 positioned above the meter 33. The shield cover 34 is positioned at a curved part 242d of the outer cover 242 shown in Fig. 3. In Fig. 5, the arrow A indicates the direction of light transmitted through the windscreen 25 or reflected by the windscreen 25 and directed toward the meter 33. The arrow B indicates the direction of light emitted by the meter 33 and directed to the windscreen 25. The two-dot chain line C indicates a range of visual inspection when a rider visually inspects the meter 33. The shield cover 34 prevents light from the meter 33 from being reflected on the windscreen 25 and is positioned in a position to shield light reflected from the windscreen 25 so that the light is not reflected on the meter 33. A rear end 34a of the shield cover 34 is positioned above the range of visual inspection when a rider visually inspects the meter 33. The shield cover 34 is positioned in such a position that the shield cover 34 does not prevent a rider from visually inspecting the meter 33. The shield cover 34 is positioned between the display surface 33a of the meter 33 and the windscreen 25.

A traveling wind from the front that blows against a lower part of the inner cover 243 comes into the duct 31 through the lower opening 244 (see the arrow G). The traveling wind entered into the duct 31 passes through the duct 31 and is let out from the upper opening 32 (see the arrow H). At the time, the shield cover 34 guides the traveling wind let out from the upper opening 32 into the space S. A traveling wind that blows against the outer cover 242 from the front (see the arrow E) passes through the gap 247 formed between the outer cover 242 and the windscreen 25. The traveling wind passed through the gap 247 is guided into a space inside the windscreen 25 (see the arrow J).

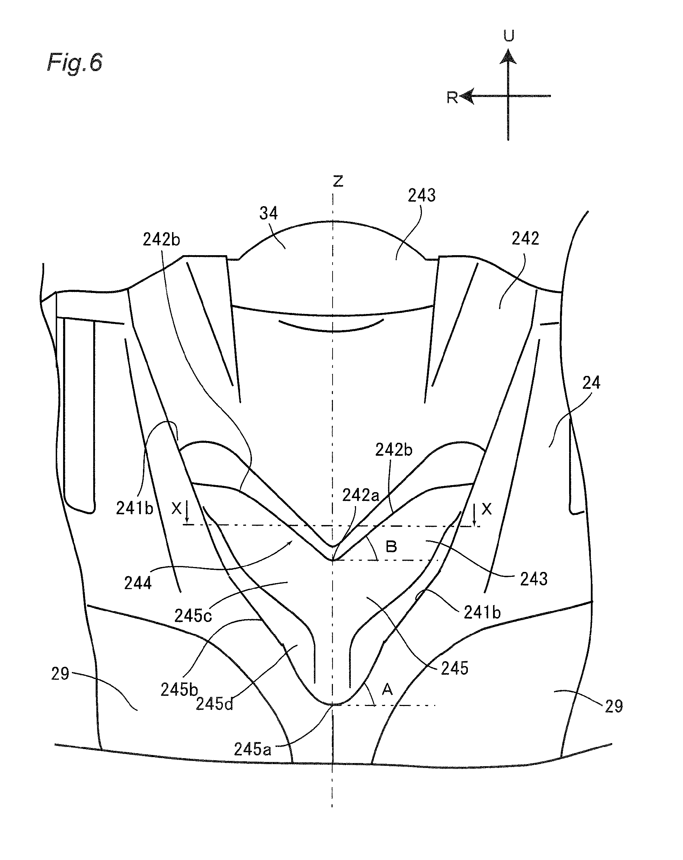

Fig. 6 is a partly enlarged front view of the front cover 24. A guide 245 is formed at a lower part of the inner cover 243. The guide 245 guides a traveling wind that blows against the front cover 24 to the lower opening 244. The guide 245 is positioned below a lower end of the outer cover 242. An upper end of the guide 245 extends to the lower opening 244. The guide 245 includes the central lower end 245a positioned in the vehicle widthwise center. The central lower end 245a is positioned in the lowermost position of the guide 245. The guide 245 includes an inclined end 245b (that corresponds to a first inclined end according to the present invention) that is inclined upward and outward from the central lower end 245a. The inclined end 245b is inclined at an inclination angle A with respect to the horizontal direction. The inclination angle A is greater than an inclination angle B. The guide 245 includes a front surface 245c and a guide wall 245d. The front surface 245c faces forward. The guide wall 245d is inclined forward from the inner side to the outer side in the vehicle-widthwise direction. The guide wall 245d is positioned between the inclined end 245b and the front surface 245c of the guide 245.

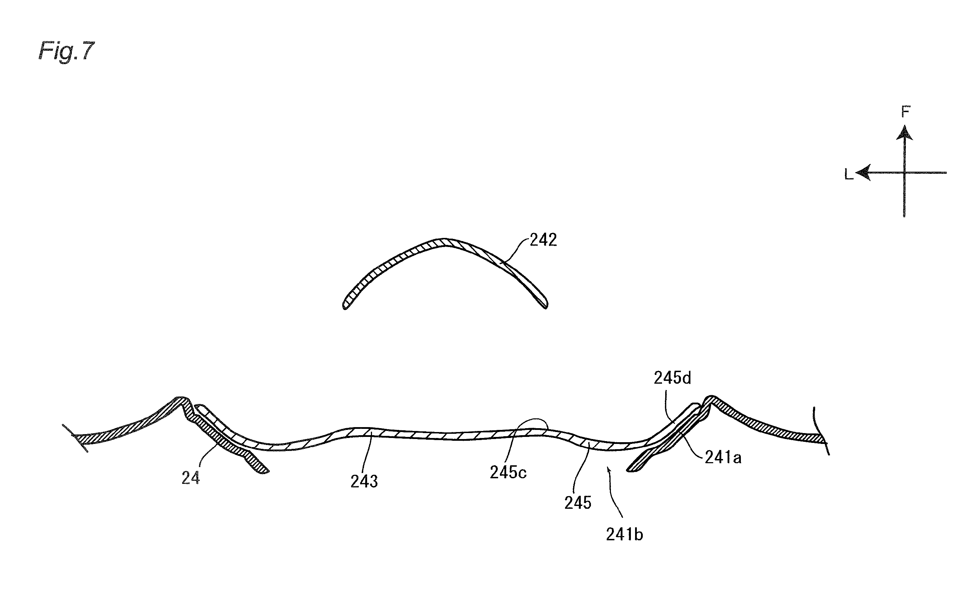

Fig. 7 is a sectional view taken along line X-X in Fig. 6. The guide wall 245d of the inner cover 243 is inclined forward and outward in the vehicle-widthwise direction from the front surface 245c. Therefore, a traveling wind that blows against the guide wall 245d and a wind that flows from the side of the cover main body 241a toward the guide wall 245d is guided toward the front surface 245c along the guide wall 245d. A part of the cover main body 241a is in contact with a rear surface of the guide wall 245d of the inner cover 243.

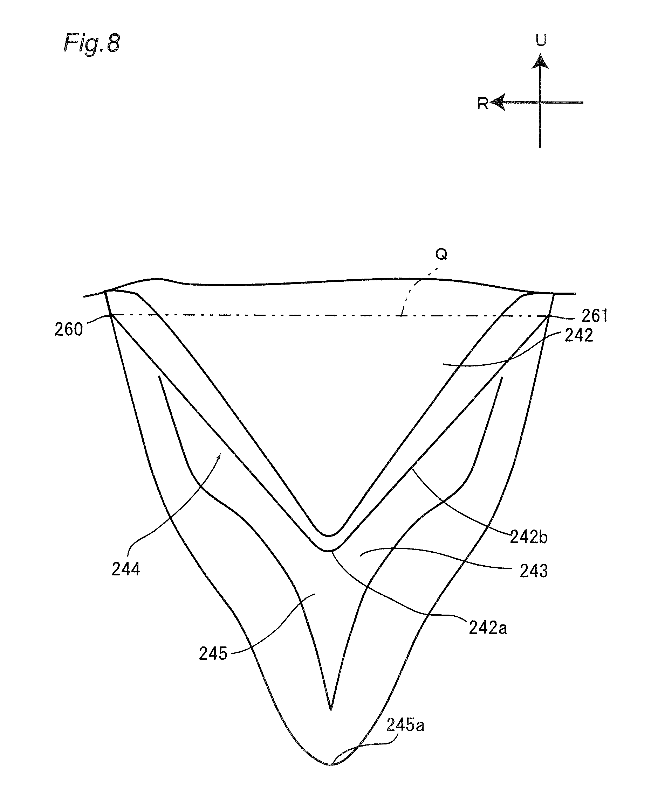

Fig. 8 is a partly enlarged front view of the guide 245 of the inner cover 243 and the outer cover 242. Fig. 8 is a view of the guide 245 of the front cover 24 from the upper front to the lower back of the motorcycle 10 showing the guide 245 of the inner cover 243 from the front. The two-dot chain line Q in Fig. 8 is a phantom line that connects a right end 260 at a lower end of the outer cover 242 and a left end 261 at a lower end of the outer cover 242. In Fig. 8, the arrangement other than the outer cover 242 and the inner cover 243 is not shown for ease of illustration. The lower opening 244 is surrounded by the lower end of the outer cover 242 and the inner cover 243. More specifically, the lower opening 244 is surrounded by the lower end of the outer cover 242 and a part of the inner cover 243 positioned in the same level as the two-dot chain line Q. The area of the lower opening 244 is equal to the area of a part surrounded by the lower end of the outer cover 242 and the two-dot chain line Q. The upper end of the guide 245 is positioned in the same level as the two-dot chain line Q. The area of the lower opening 244 is smaller than the area of the guide 245.

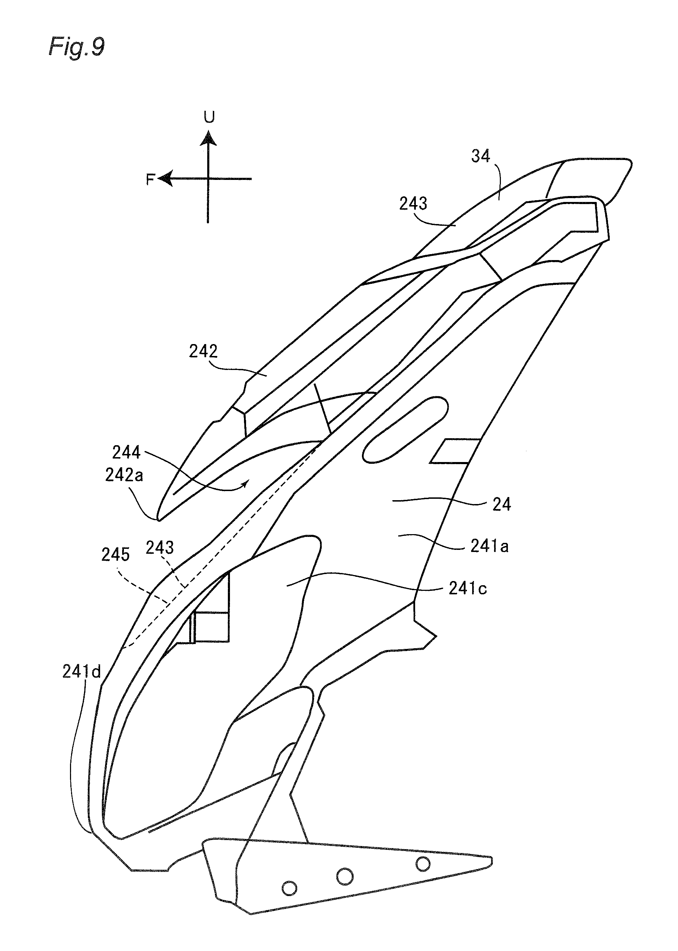

Fig. 9 is a left side view of the front cover 24. Fig. 9 shows the front cover 24 as the lens of the headlight 29 is removed. The front cover 24 is inclined downward and forward from the back in a left side view. The cover main body 241a has a lower part 241d in an arch shape in a side view. The cover main body 241a has an opening 241c in which the headlight 29 can be positioned.

The outer cover 242 is inclined downward and forward from the back in a side view. The lowermost end 242a of the outer cover 242 is positioned above the headlight 29. A part of the inner cover 243 extends backward and upward from a rear end of the outer cover 242 in a left side view. The guide 245 of the inner cover 243 is more depressed to the rear side than the outer shape of the cover main body 241a in a left side view. The guide 245 of the inner cover 243 is more depressed to the rear side than a part of the cover main body 241a positioned around the guide 245.

Fig. 10 is a view of a peripheral structure of the meter 33. The upper opening 32 is positioned above the meter 33. The upper opening 32 includes a central opening 321 (that corresponds to a third opening according to the present invention) and an outer opening 322 (that corresponds to a fourth opening according to the present invention). The central opening 321 is positioned in the vehicle widthwise center. The central opening 321 is positioned under the shield cover 34. The outer opening 322 is positioned on the outer side of the central opening 321 in the vehicle widthwise direction. The rib 42 and an upper end of the partition 41 are positioned in the outer opening 322. The partition 41 and the rib 42 are inclined outwardly in the vehicle widthwise direction from the lower end to the upper end when a rider seated on the seat 17 visually inspects the outer opening 322. A traveling wind is blown out from a part more on the central side in the vehicle widthwise direction than the central opening 321 and the partition 41 in the outer opening 322. A traveling wind is blown out from a range between a pair of partitions 41 in the vehicle widthwise direction.

### Operation

As the motorcycle 10 travels, a traveling wind blows against the front cover 24. At the time, a wind blowing against the guide 245 of the inner cover 243 and around the guide 245 is partly guided to the lower opening 244 by the guide wall 245d or the like. The traveling wind guided to the lower opening 244 is passed through the duct 31 and let out from the upper opening 32 into the space S formed between a rider and the front cover 24. A traveling wind that is not guided into the lower opening 244 moves backward along the front cover 24. A traveling wind that blows against the outer cover 242 moves along the surface of the outer cover 242 and partly comes into the gap 247 formed between the windscreen 25 and the front cover 24. The traveling wind entered into the gap 247 comes into a space inside the windscreen 25. The traveling wind that is not entered into the gap 247 moves backward along the windscreen 25.

### Features of the Embodiment

In the motorcycle 10 according to the above-described embodiment, the front cover 24 is provided with the guide 245. A traveling wind that blows against the front cover 24 is collected to the guide 245. The guide 245 is more depressed to the back side than a part of the cover main body 241a around the guide 245 in a side view. Therefore, a traveling wind is easily gathered at the guide 245. The upper end of the guide 245 extends to the lower opening 244, and therefore a traveling wind that blows against the front cover 24 easily comes into the lower opening 244. The motorcycle 10 has the duct 31 between the lower opening 244 and the upper opening 32 and the upper opening 32 is continuous with the space S formed between the front cover 24 and a rider. In the structure of the motorcycle 10, a traveling wind collected by the guide 245 is supplied entirely into the space S. Therefore, in the motorcycle 10, a sufficient amount of traveling wind can be supplied to the space S. Therefore, a pressure difference between the space S and a space surrounding the space S can be reduced effectively.

In the above-described motorcycle 10, a part of a traveling wind that blows against the outer cover 242 comes from the gap 247 into a space inside the windscreen 25. Therefore, the negative pressure on the windscreen 25 can be reduced.

For example, if a gap is provided between the windscreen and the front cover and a duct is provided between the gap and the space S, so that a traveling wind is supplied into the space S between a rider and the front cover, the arrangement used to supply a traveling wind into the space S includes three parts, i.e., the windscreen, the front cover, and the duct.

The above-described motorcycle 10 allows a traveling wind to be supplied efficiently into the space S using the two parts, i.e., the front cover 24 and the outer cover 242. In other words, the traveling wind can be supplied to the space S with a reduced number of parts.

The above-described motorcycle 10 has the duct 31 formed between the surface of the front cover 24 and the outer cover 242 that is used to supply a traveling wind into the space S. Therefore, the front cover 24 can be reduced in size as compared to the case of forming a duct inside the front cover.

In order to guide a sufficient amount of traveling wind into the space S using a structure other than that of the motorcycle 10 described above, the lower opening 244 may be enlarged. However, enlarging the lower opening 244 enlarges the front cover 24.

In the motorcycle 10 according to the embodiment, a traveling wind is collected at the guide 245, so that a sufficient amount of traveling wind can be supplied into the space S without enlarging the front cover 24.

In the motorcycle 10, the guide 245 is positioned in the vehicle widthwise center. In motorcycles in general, the amount of traveling wind that blows against the widthwise center of the vehicle is the largest, and therefore the above-described motorcycle 10 allows a traveling wind to be entered efficiently into the lower opening 244.

In the above-described motorcycle 10, an upper end of the head light 29 is inclined downward to the center from the outer side in the vehicle widthwise direction and the central lower end 245a is positioned in the vehicle widthwise center, so that the size of the headlight 29 can be prevented from being reduced in size because of the guide 245.

In the above-described motorcycle 10, the guide 245 is provided with the inclined end 245b. The inclined end 245b is inclined upward and outward in the vehicle widthwise direction from the central lower end 245a of the inner cover 243. Therefore, the guide 245 may have a greater area than the case that there is no inclined end 245b and ends of the guide 245 extend upward from the lower end. Therefore, it is easier to guide a traveling wind into the lower opening 244.

In the motorcycle 10, the inclination angle A of the inclined end 245b with respect to the horizontal direction is greater than the inclination angle B of the inclined end 242b with respect to the horizontal direction. A traveling wind that blows against the front cover 24 partly comes into the space S formed between the meter 33 and a rider from the gap 247 formed between the outer cover 242 and the windscreen 25. On the other hand, a part of a wind that blows against the front cover 24 comes into the duct 31 from the lower opening 244 and then into the space S formed between the meter 33 and a rider from the upper opening 32. The amount of the wind coming into the gap 247 formed between the outer cover 242 and the windscreen 25 and the amount of the traveling wind coming into the lower opening 244 are better balanced.

In the motorcycle 10, the inclined end 245b is provided with the guide wall 245d. Therefore, a wind that blows against the front cover 24 is allowed to enter the lower opening 244 efficiently.

In the motorcycle 10, the shield cover 34 is positioned in such a position that light from the meter 33 can be prevented from being reflected on the windscreen 25 and light reflected by the windscreen 25 can be shielded and kept from being reflected on the meter 33. Therefore, light from the meter 33 is not reflected on the windscreen 25, and this makes it easier for a rider to visually inspect ahead of the vehicle. Light transmitted through the windscreen 25 and light reflected by the windscreen 25 can be prevented from being reflected on the meter 33, which makes it easier for a rider to visually inspect the meter 33.

In the motorcycle 10, the outer opening 322 of the outer cover 242 is provided with the partitions 41. In this way, the amount of wind coming into the space S formed between a rider and the meter 33 can be reduced as compared to the amount of wind coming into the lower opening 244. Therefore, pressure by wind felt by the rider can be reduced appropriately.

In the motorcycle 10, when the upper opening 32 is viewed from a rider seated on the seat 17, the ribs 42 and the partitions 41 are inclined forward and outward in the vehicle widthwise direction. Therefore, in the motorcycle 10, it is difficult for the rider seated on the seat 17 to visually inspect the inside of the duct 31 between the outer cover 242 and the inner cover 243 from the outside. Therefore, it is no longer necessary to provide the entire outer cover 242 and the entire inner cover 243 with surface treatment.

### Other Embodiments

(1) The motorcycle 10 according to the embodiment has been described but the invention is not limited to the above and may be applied for example to a three- or four- wheeled saddle riding type vehicle.
(2) In the motorcycle 10 according to the embodiment, the ribs 42 and the partitions 41 are inclined with respect to the cover plate 40 but the invention is not limited to the arrangement. The ribs 42 and the partitions 41 do not have to be inclined or their inclination angles may be different from those of the above-described embodiment.

## Claims

1. A saddle riding type vehicle (10), comprising:
a head pipe (20);
a front cover (24) positioned in front of the head pipe (20) and provided with a headlight (29);
an outer cover (242) attached at a front surface of the front cover (24); and
a screen (25) positioned above the outer cover (242),
the screen (25) overlapping the front cover (24) in a location above a lower end of the outer cover (242) in a front view,
a duct (31) being formed between the front cover (24) and the outer cover (242) to extend in an up-down direction,
**characterized in that**
the duct (31) comprises a first opening (244) that is open downward and a second opening (32) positioned above the first opening (244) to guide a traveling wind to a rider,
the front cover (24) comprises a guide (245) positioned below the first opening (244), wherein the guide (245) has an upper end that extends to the first opening (244),
the guide (245) is positioned below a lower end of the outer cover (242) and more depressed to a rear side than a part of a cover main body (241a) of the front cover (24) positioned around the guide (245) in a side view,
wherein traveling wind blowing against the guide (245) is guided into the first opening (244) by the guide (245), passes through the duct (31) and is let out from the second opening (32).

2. The saddle riding type vehicle (10) according to claim 1, wherein the guide (245) overlaps a central line (Z) passing through a center in a vehicle widthwise direction in a front view.

3. The saddle riding type vehicle (10) according to claim 1 or 2, wherein the first opening (244) is positioned at a lower end of the duct (31), and
the second opening (32) is positioned at an upper end of the duct (31).

4. The saddle riding type vehicle (10) according to any one of claims 1 to 3, wherein the first opening (244) has an area smaller than that of the guide (245).

5. The saddle riding type vehicle (10) according to any one of claims 1 to 4, wherein the front cover (24) comprises the cover main body (241a) provided with the headlight (29) and an inner cover (243) supported at the cover main body to form the duct (31) together with the outer cover (242),
the inner cover (243) extends to below the outer cover (242),
the guide (245) is positioned at a lower part of the inner cover (243),
the headlight is positioned below the first opening (244),
an upper end of the headlight is inclined downward and toward the center in the vehicle widthwise direction from an outer side in the vehicle widthwise direction, and
a lower end of the guide (245) is positioned in the center in the vehicle widthwise direction.

6. The saddle riding type vehicle (10) according to any one of claims 1 to 5, wherein the guide (245) comprises a front surface (245c) that faces forward and a guide wall (245d) that extends forward from an end of the front surface (245c),
the front surface (245c) is connected to the first opening (244), and
the guide wall (245d) is provided at an end of the guide (245).

7. The saddle riding type vehicle (10) according to claim 6, wherein a lower end of the guide (245) comprises a first lower end (245a) positioned in the vehicle widthwise center, and
a first inclined end (245b) that is inclined upward and outward in the vehicle widthwise direction from the first lower end (245a).

8. The saddle riding type vehicle (10) according to claim 7, wherein the outer cover (242) comprises a second lower end (242a) positioned in the vehicle widthwise center, and
a lower end of the outer cover (242) comprises a second inclined end (242b) that is inclined upward and outward in the vehicle widthwise direction from the second lower end (242a).

9. The saddle riding type vehicle (10) according to claim 8, wherein an inclination angle of the first inclined end (245b) with respect to the horizontal direction is greater than an inclination angle of the second inclined end (242b) with respect to the horizontal direction.

10. The saddle riding type vehicle (10) according to claim 5, further comprising a handle (16) and a meter (33) provided at the handle (16), wherein the second opening (32) is provided above the meter (33).

11. The saddle riding type vehicle (10) according to claim 10, wherein at least a part of an upper end of the inner cover (243) is provided in such a position that light reflected by the screen (25) is shielded so that the meter (33) is not irradiated with the light and the screen (25) is prevented from being irradiated with light from the meter (33).

12. The saddle riding type vehicle (10) according to claim 5, wherein one of the outer cover (242) and the inner cover (243) comprises a partition (41),
the partition (41) is positioned between the outer cover (242) and the inner cover (243) to extend downward from the second opening (32), and
an upper end of the partition (41) is connected to an edge (40a) of the second opening (32).

13. The saddle riding type vehicle (10) according to claim 12, wherein the second opening (32) comprises a third opening (321) positioned in the vehicle widthwise center and a fourth opening (322) positioned on an outer side of the third opening (321) in the vehicle widthwise direction, and
an upper end of the partition is positioned at the fourth opening (322).

14. The saddle riding type vehicle (10) according to claim 13, wherein the fourth opening (322) has a rib (42), and
the rib (42) and the partition (41) are inclined in a direction toward the outer side in the vehicle widthwise direction from their lower ends to their upper ends.

15. The saddle riding type vehicle (10) according to claim 14, wherein the rib (42) and the partition (41) are inclined forward and outward in the vehicle widthwise direction.

16. The saddle riding type vehicle (10) according to any one of claims 1 to 15, wherein a lower part of the screen (25) and an upper part of the outer cover (242) overlap in the up-down direction, and
a lower end of the screen (25) is positioned apart and above the outer cover (242).

## Patentansprüche

1. Ein Sattel-Fahr-Typ-Fahrzeug (10), das folgende Merkmale aufweist:
ein Kopfrohr (20);
eine Frontabdeckung (24), die vor dem Kopfrohr (20) positioniert ist und mit einem Scheinwerfer (29) versehen ist;
eine Außenabdeckung (242), die an einer Frontoberfläche der Frontabdeckung (24) angebracht ist; und
eine Windschutzscheibe (25), die oberhalb der Außenabdeckung (242) positioniert ist,
wobei die Windschutzscheibe (25) die Frontabdeckung (24) an einem Ort oberhalb eines unteren Endes der Außenabdeckung (242) in einer Vorderansicht überlappt,
einen Kanal (31), der zwischen der Frontabdeckung (24) und der Außenabdeckung (242) gebildet ist und sich dabei in einer Auf-Ab-Richtung erstreckt,
**dadurch gekennzeichnet, dass**:
der Kanal (31) eine erste Öffnung (244), die nach unten hin offen ist, und eine zweite Öffnung (32) aufweist, die oberhalb der ersten Öffnung (242) positioniert ist, um Fahrwind zu einem Fahrer zu führen,
die Frontabdeckung (24) eine Führung (245) aufweist, die unterhalb der ersten Öffnung (244) positioniert ist, wobei die Führung (245) ein oberes Ende aufweist, das sich zu der ersten Öffnung (244) erstreckt,
die Führung (245) in einer Seitenansicht unterhalb eines unteren Endes der Außenabdeckung (242) positioniert ist und zu einer Rückseite hin weiter eingerückt ist als ein Teil eines Abdeckhauptkörpers (241 a) der Frontabdeckung (24), der um die Führung (245) herum positioniert ist,
wobei Fahrtwind, der gegen die Führung (245) bläst, durch die Führung (245) in die erste Öffnung (244) geführt wird, durch den Kanal 31) läuft und aus der zweiten Öffnung (32) herausgelassen wird.

2. Das Sattel-Fahr-Typ-Fahrzeug (10) gemäß Anspruch 1, bei dem die Führung (245) in einer Vorderansicht eine Mittellinie (Z) überlappt, die durch eine Mitte in einer Fahrzeugbreitenrichtung verläuft.

3. Das Sattel-Fahr-Typ-Fahrzeug (10) gemäß Anspruch 1 oder 2, bei dem die erste Öffnung (244) an einem unteren Ende des Kanals (31) positioniert ist, und
die zweite Öffnung (32) an einem oberen Ende des Kanals (31) positioniert ist.

4. Das Sattel-Fahr-Typ-Fahrzeug (10) gemäß einem der Ansprüche 1 bis 3, bei dem die erste Öffnung (244) eine Fläche aufweist, die kleiner ist als diejenige der Führung (245).

5. Das Sattel-Fahr-Typ-Fahrzeug (10) gemäß einem der Ansprüche 1 bis 4, bei dem bei der Frontabdeckung (24) der Abdeckhauptkörper (241 a) mit dem Scheinwerfer (29) versehen ist und eine Innenabdeckung (243) an dem Abdeckhauptkörper getragen wird, um zusammen mit der Außenabdeckung (242) den Kanal (31) zu bilden,
sich die Innenabdeckung (243) bis unterhalb der Außenabdeckung (242) erstreckt,
die Führung (245) an einem unteren Teil der Innenabdeckung (243) positioniert ist,
der Scheinwerfer unterhalb der ersten Öffnung (244) positioniert ist,
ein oberes Ende des Scheinwerfers nach unten und von einer Außenseite in der Fahrzeugbreitenrichtung in Richtung der Mitte in der Fahrzeugbreitenrichtung geneigt ist, und
ein unteres Ende der Führung (245) in der Mitte in der Fahrzeugbreitenrichtung positioniert ist.

6. Das Sattel-Fahr-Typ-Fahrzeug (10) gemäß einem der Ansprüche 1 bis 5, bei dem die Führung (245) eine Frontoberfläche (245c), die nach vorne zeigt, und eine Führungswand (245d) aufweist, die sich von einem Ende der Frontoberfläche (245c) nach vorne erstreckt,
die Frontoberfläche (245c) mit der ersten Öffnung (244) verbunden ist, und
die Führungswand (245d) an einem Ende der Führung (245) vorgesehen ist.

7. Das Sattel-Fahr-Typ-Fahrzeug (10) gemäß Anspruch 6, bei dem ein unteres Ende der Führung (245) ein erstes unteres Ende (245a), das in der Fahrzeugbreitenmitte positioniert ist, und
ein erstes geneigtes Ende (245b) aufweist, das in der Fahrzeugbreitenrichtung von dem ersten unteren Ende (245a) nach oben und nach außen geneigt ist.

8. Das Sattel-Fahr-Typ-Fahrzeug (10) gemäß Anspruch 7, bei dem die Außenabdeckung (242) ein zweites unteres Ende (242a) aufweist, das in der Fahrzeugbreitenmitte positioniert ist, und
ein unteres Ende der Außenabdeckung (242) ein zweites geneigtes Ende (242b) aufweist, das in der Fahrzeugbreitenrichtung von dem zweiten unteren Ende (242a) nach oben und nach außen geneigt ist.

9. Das Sattel-Fahr-Typ-Fahrzeug (10) gemäß Anspruch 8, bei dem ein Neigungswinkel des ersten geneigten Endes (245b) in Bezug auf die Horizontalrichtung größer ist als ein Neigungswinkel des zweiten geneigten Endes (242b) in Bezug auf die Horizontalrichtung.

10. Das Sattel-Fahr-Typ-Fahrzeug (10) gemäß Anspruch 5, das ferner einen Griff (16) und ein Messgerät (33), das an dem Griff (16) vorgesehen ist, aufweist, wobei die zweite Öffnung (32) oberhalb des Messgeräts (33) vorgesehen ist.

11. Das Sattel-Fahr-Typ-Fahrzeug (10) gemäß Anspruch 10, bei dem zumindest ein Teil eines oberen Endes der Innenabdeckung (243) an einer derartigen Position vorgesehen ist, dass Licht, das durch die Windschutzscheibe (25) reflektiert wird, abgeschirmt ist, so dass das Messgerät (33) nicht mit dem Licht bestrahlt wird und eine Bestrahlung der Windschutzscheibe (25) mit Licht von dem Messgerät (33) verhindert wird.

12. Das Sattel-Fahr-Typ-Fahrzeug (10) gemäß Anspruch 5, bei dem eine der Außenabdeckung (242) und der Innenabdeckung (243) eine Unterteilung (41) aufweist,
die Unterteilung (41) zwischen der Außenabdeckung (242) und der Innenabdeckung (243) positioniert ist und sich dabei von der zweiten Öffnung (32) nach unten erstreckt, und
ein oberes Ende der Unterteilung (41) mit einem Rand (40a) der zweiten Öffnung (32) verbunden ist.

13. Das Sattel-Fahr-Typ-Fahrzeug (10) gemäß Anspruch 12, bei dem die zweite Öffnung (32) eine dritte Öffnung (321), die in der Fahrzeugbreitenmitte positioniert ist, und eine vierte Öffnung (322) aufweist, die in der Fahrzeugbreitenrichtung an einer Außenseite der dritten Öffnung (321) positioniert ist, und
ein oberes Ende der Unterteilung an der vierten Öffnung (322) positioniert ist.

14. Das Sattel-Fahr-Typ-Fahrzeug (10) gemäß Anspruch 13, bei dem die vierte Öffnung (322) einen Steg (42) aufweist, und
der Steg (42) und die Unterteilung (41) von deren unteren Enden zu deren oberen Enden in einer Richtung in Richtung der Außenseite in der Fahrzeugbreitenrichtung geneigt sind.

15. Das Sattel-Fahr-Typ-Fahrzeug (10) gemäß Anspruch 14, bei dem der Steg (42) und die Unterteilung (41) in der Fahrzeugbreitenrichtung nach vorne und nach außen geneigt sind.

16. Das Sattel-Fahr-Typ-Fahrzeug (10) gemäß einem der Ansprüche 1 bis 15, bei dem ein unterer Teil der Windschutzscheibe (25) und ein oberer Teil der Außenabdeckung (242) sich in der Auf-Ab-Richtung überlappen, und
ein unteres Ende der Windschutzscheibe (25) von der Außenabdeckung (242) getrennt und oberhalb derselben positioniert ist.

## Revendications

1. Véhicule de type à enfourcher (10), comprenant:
un tuyau de tête (20);
un couvercle avant (24) positionné à l'avant du tuyau de tête (20) et pourvu d'un phare (29);
un couvercle extérieur (242) fixé à une surface avant du couvercle avant (24); et
un pare-brise (25) positionné au-dessus du couvercle extérieur (242),
le pare-brise (25) recouvrant le couvercle avant (24) à un endroit au-dessus d'une extrémité inférieure du couvercle extérieur (242), en vue de face,
un conduit (31) étant formé entre le couvercle avant (24) et le couvercle extérieur (242), de manière à s'étendre dans une direction du haut vers le bas,
**caractérisé par le fait que**
le conduit (31) comprend une première ouverture (244) qui est ouverte vers le bas et une deuxième ouverture (32) positionnée au-dessus de la première ouverture (244) pour guider un vent se déplaçant vers un conducteur,
le couvercle avant (24) comprend un guide (245) positionné au-dessous de la première ouverture (244), où le guide (245) présente une extrémité supérieure qui s'étend vers la première ouverture (244),
le guide (245) est positionné au-dessous d'une extrémité inférieure du couvercle extérieur (242) et plus enfoncé vers un côté arrière d'une partie d'un corps principal de couvercle (241a) du couvercle frontal (24) positionnée autour du guide (245), en vue de côté,
dans lequel le vent se déplaçant soufflant contre le guide (245) est guidé dans la première ouverture (244) par le guide (245), passe à travers le conduit (31) et est sorti par la deuxième ouverture (32).

2. Véhicule de type à enfourcher (10) selon la revendication 1, dans lequel le guide (245) vient en recouvrement avec une ligne centrale (Z) passant par un centre dans un sens de la largeur du véhicule, en vue de face.

3. Véhicule de type à enfourcher (10) selon la revendication 1 ou 2, dans lequel la première ouverture (244) est positionnée à une extrémité inférieure du conduit (31), et
la deuxième ouverture (32) est positionnée à une extrémité supérieure du conduit (31).

4. Véhicule de type à enfourcher (10) selon l'une quelconque des revendications 1 à 3, dans lequel la première ouverture (244) présente une superficie plus petite que celle du guide (245).

5. Véhicule de type à enfourcher (10) selon l'une quelconque des revendications 1 à 4, dans lequel le couvercle avant (24) comprend le corps principal de couvercle (241a) pourvu du phare (29) et un couvercle intérieur (243) supporté sur le corps principal de couvercle, pour former le conduit (31) ensemble avec le couvercle extérieur (242),
le couvercle intérieur (243) s'étend au-dessous du couvercle extérieur (242),
le guide (245) est positionné dans une partie inférieure du couvercle intérieur (243),
le phare est positionné au-dessous de la première ouverture (244),
une extrémité supérieure du phare est inclinée vers le bas et vers le centre dans le sens de la largeur du véhicule depuis un côté extérieur dans le sens de la largeur du véhicule, et
une extrémité inférieure du guide (245) est positionnée au centre dans le sens de la largeur du véhicule.

6. Véhicule de type à enfourcher (10) selon l'une quelconque des revendications 1 à 5, dans lequel le guide (245) comprend une surface avant (245c) qui est orientée vers l'avant et une paroi de guidage (245d) qui s'étend vers l'avant depuis une extrémité de la surface avant (245c),
la surface avant (245c) est connectée à la première ouverture (244), et
la paroi de guidage (245d) est prévue à une extrémité du guide (245).

7. Véhicule de type à enfourcher (10) selon la revendication 6, dans lequel une extrémité inférieure du guide (245) comprend une première extrémité inférieure (245a) positionnée au centre dans le sens de la largeur du véhicule, et
une première extrémité inclinée (245b) qui est inclinée vers le haut et vers l'extérieur dans le sens de la largeur du véhicule depuis la première extrémité inférieure (245a).

8. Véhicule de type à enfourcher (10) selon la revendication 7, dans lequel le couvercle extérieur 242) comprend une deuxième extrémité inférieure (242a) positionnée au centre dans le sens de la largeur du véhicule, et
une extrémité inférieure du couvercle extérieur (242) comprend une deuxième extrémité inclinée (242b) qui est inclinée vers le haut et vers l'extérieur dans le sens de la largeur du véhicule depuis la deuxième extrémité inférieure (242a).

9. Véhicule de type à enfourcher (10) selon la revendication 8, dans lequel un angle d'inclinaison de la première extrémité inclinée (245b) par rapport à la direction horizontale est plus grand qu'un angle d'inclinaison de la deuxième extrémité inclinée (242b) par rapport à la direction horizontale.

10. Véhicule de type à enfourcher (10) selon la revendication 5, comprenant par ailleurs une poignée (16) et un compteur (33) prévu sur la poignée (16), dans lequel la deuxième ouverture (32) est prévue au-dessus du compteur (33).

11. Véhicule de type à enfourcher (10) selon la revendication 10, dans lequel au moins une partie d'une extrémité supérieure du couvercle intérieur (243) est prévue dans une position telle que la lumière réfléchie par le pare-brise (25) ne soit pas éblouissante, de sorte que le compteur (33) ne soit pas irradié par la lumière et qu'il soit évité que le pare-brise (25) ne soit irradié par la lumière provenant du compteur (33).

12. Véhicule de type à enfourcher (10) selon la revendication 5, dans lequel l'un parmi le couvercle extérieur (242) et le couvercle intérieur (243) comprend une cloison (41),
la cloison (41) est positionnée entre le couvercle extérieur (242) et le couvercle intérieur (243), de manière à s'étendre vers le bas depuis la deuxième ouverture (32), et
une extrémité supérieure de la cloison (41) est connectée à un bord (40a) de la deuxième ouverture (32).

13. Véhicule de type à enfourcher (10) selon la revendication 12, dans lequel la deuxième ouverture (32) comprend une troisième ouverture (321) positionnée au centre dans le sens de la largeur du véhicule et une quatrième ouverture (322) positionnée sur un côté extérieur de la troisième ouverture (321) dans le sens de la largeur du véhicule, et
une extrémité supérieure de la cloison est positionnée à la quatrième ouverture (322).

14. Véhicule de type à enfourcher (10) selon la revendication 13, dans lequel la quatrième ouverture (322) présente une nervure (42), et
la nervure (42) et la cloison (41) sont inclinées dans une direction vers le côté extérieur dans le sens de la largeur du véhicule, de leurs extrémités inférieures à leurs extrémités supérieures.

15. Véhicule de type à enfourcher (10) selon la revendication 14, dans lequel la nervure (42) et la cloison (41) sont inclinées vers l'avant et vers l'extérieur dans le sens de la largeur du véhicule.

16. Véhicule de type à enfourcher (10) selon l'une quelconque des revendications 1 à 15, dans lequel une partie inférieure du pare-brise (25) et une partie supérieure du couvercle extérieur (242) viennent en recouvrement dans le sens du haut vers le bas, et
une extrémité inférieure du pare-brise (25) est positionnée séparée et au-dessus du couvercle extérieur (242).
